# FASCICULE DE BREVET EUROPEEN

(11) **EP 3 233 713 B1**
(45) Date de publication et mention de la délivrance du brevet: **02.01.2019**
(21) Numéro de dépôt: 15820121.0
(22) Date de dépôt: 18.12.2015
(51) Int. Cl.: B66F 11/04, B60Q 1/32, B66F 17/00

(54) **NACELLE ÉLÉVATRICE ET PROCÉDÉ DE MISE EN OEUVRE**
LUFTAUFZUG UND VERFAHREN ZUR IMPLEMENTIERUNG DAVON
AERIAL LIFT AND METHOD FOR IMPLEMENTING SAME

(30) Priorité: 18.12.2014 FR 1462803
(43) Date de publication de la demande: 25.10.2017
(73) Titulaire: Haulotte Group, 42152 L'Horme (FR)
(72) Inventeur: LUMINET, Philippe, 69001 Lyon (FR); DITTUS, Sebastian, 69440 Mornant (FR)
(74) Mandataire: Lavoix
(86) Numéro de dépôt international: PCT/EP2015/080648
(87) Numéro de publication internationale: WO 2016/097367

(56) Documents cités:
- EP-A1- 2 374 635
- DE-A1- 2 924 820
- DE-A1-102012 024 494
- DE-U1- 20 312 419
- FR-A1- 2 909 084
- US-A- 4 309 742
- US-A- 5 682 138
- US-A1- 2012 025 964

## Description

La présente invention concerne une nacelle élévatrice. L'invention concerne également un procédé de mise en oeuvre d'une telle nacelle élévatrice. Le domaine de l'invention est celui des nacelles élévatrices de personnel.

EP-A-2 374 635 décrit un exemple de nacelle élévatrice, comprenant un châssis motorisé muni de roues, une tourelle pivotant à 360 degrés sur le châssis, un bras élévateur articulé sur la tourelle, et une plate-forme mobile agencée à l'extrémité du bras élévateur.

Comme cela est décrit dans DE-A-29 24 820, la plateforme peut être équipée d'un phare de travail permettant à l'utilisateur d'éclairer la zone en hauteur où il effectue des travaux. Egalement, la nacelle peut être équipée d'un gyrophare, généralement placé sur la tourelle ou le châssis, permettant de signaler que la machine est en cours d'utilisation.

Sur d'autres types d'engins de chantier, comme les chariots télescopiques rotatifs, le châssis ou la tourelle est équipée de phares de conduite projetant des faisceaux lumineux vers l'avant et vers l'arrière pour la circulation sur la voie publique.

Généralement, une nacelle élévatrice est livrée ou récupérée sur son lieu d'utilisation tôt le matin ou tard le soir, en étant transportée sur la remorque d'un véhicule de transport. Un opérateur décharge la nacelle de la remorque, ou charge la nacelle sur la remorque, via une rampe. Ces opérations présentent un risque d'accident, en particulier lorsque les conditions d'éclairage et/ou les conditions climatiques sont mauvaises. Par exemple, l'opérateur peut être amené à piloter la nacelle de nuit, alors que la position des roues par rapport au bord de la rampe est difficilement discernable. Lors de ces opérations, l'utilisation de phares de conduite classiques ne procurerait pas une visibilité optimale à l'opérateur.

Dans ce contexte, il est connu d'équiper la remorque ou la rampe avec des dispositifs d'éclairage, par exemple des bandes de diodes électroluminescentes (LED). Cependant, cela nécessite de modifier les équipements de transport, car la plupart ne sont pas équipés de tels dispositifs. En outre, ces dispositifs ne procurent pas une visibilité optimale à l'opérateur. Le risque d'accident est donc toujours présent.

US-A-2013/0265789 décrit un exemple de véhicule de transport, comprenant une remorque amovible pour former une rampe de chargement. La remorque est équipée de dispositifs d'éclairage.

En alternative, il est envisageable d'éclairer la nacelle et son proche environnement avec des projecteurs disposés au sol. Cependant, de tels projecteurs ne sont pas toujours disponibles, car ils représentent un surcroît de matériel à acheter et stocker, et donc un surcoût. Par ailleurs, la mise en place de tels projecteurs avant de déplacer la nacelle et leur rangement après avoir déplacé la nacelle prend du temps.

D'autre part, une nacelle élévatrice évolue dans un environnement de chantier où elle est susceptible d'effectuer des manoeuvres dans toutes les directions pour atteindre la zone de travail. Dans ce cas, il est nécessaire de vérifier l'absence d'obstacles et de trous sur toute la périphérie de la machine, et pas seulement à l'avant du châssis. Si les conditions d'éclairage et/ou les conditions climatiques sont mauvaises, l'opérateur distingue difficilement de tels obstacles ou trous.

Les nacelles élévatrices utilisées à l'intérieur de bâtiments sont généralement équipées de motorisations électriques quasi silencieuses. Dans ce cas, on utilise un gyrophare pour que les personnes à proximité de la nacelle puissent reconnaitre qu'une intervention est en cours. Néanmoins, il n'est pas toujours possible de positionner un gyrophare de manière à ce que son faisceau lumineux soit perçu par les personnes à proximité, quelle que soit leur position.

US-B-5 682 138 décrit un système d'éclairage pour un véhicule tel qu'un camion, comprenant un projecteur adapté pour éclairer les roues arrières du véhicule et le sol aux abords latéraux du véhicule. Un tel système n'est pas adapté aux nacelles élévatrices.

Le but de la présente invention est de remédier aux inconvénients ci-dessus.

A cet effet, l'invention a pour objet une nacelle élévatrice, comprenant : une partie basse équipée d'organes de liaison au sol ; une structure élévatrice ; une plate-forme portée par la structure élévatrice; et un système d'éclairage comprenant différents dispositifs d'éclairage autres que des phares de conduite. La nacelle élévatrice est caractérisée en ce qu'elle comprend une console de commande disposée sur la plateforme et dont la position par rapport aux organes de liaison au sol est variable, et en ce que les dispositifs d'éclairage sont agencés sur la partie basse de la nacelle élévatrice et/ou sur la structure élévatrice ou sur la plateforme et génèrent sélectivement des faisceaux lumineux dirigés vers le sol et l'environnement proche de la nacelle élévatrice, incluant au moins en partie une zone comprise entre 0 et 1 mètre du bord des organes de liaison au sol, ces faisceaux lumineux étant dirigés vers quatre côtés opposés deux-à-deux de la nacelle élévatrice quelle que soit la position de la console de commande par rapport aux organes de liaison au sol.

Ainsi, l'invention permet de disposer d'un système d'éclairage performant, simple et pratique à mettre en oeuvre, adapté pour illuminer le sol et l'environnement proche de la nacelle. Un opérateur présent sur la plateforme de la nacelle élévatrice pour contrôler ses déplacements bénéficie d'une vision claire des abords de la partie basse dans toutes les directions quelle que soit l'orientation de la plateforme par rapport à la partie basse. En particulier, le système d'éclairage permet d'illuminer la remorque et la rampe du véhicule de transport lors du chargement ou du déchargement de la nacelle. Dans des conditions de conditions de faibles luminosité et visibilité, ces opérations sont donc sécurisées. De plus, l'invention peut être mise en oeuvre pendant les interventions et les déplacements de la nacelle sur un chantier, même en journée, afin d'avertir les personnes autour de la nacelle des conditions de fonctionnement et en particulier des situations d'urgence. L'invention permet donc de réduire les risques d'accidents, ce qui répond à un impératif de sécurité primordial.

En comparaison avec des phares de conduite classiques, les dispositifs d'éclairage selon l'invention procurent une visibilité améliorée autour de la nacelle. En comparaison avec des dispositifs d'éclairage équipant la remorque et la rampe, les dispositifs d'éclairage selon l'invention ne nécessitent pas de modifier les équipements de transport et procurent une visibilité améliorée autour de la nacelle. En comparaison avec des projecteurs devant être installés autour de la nacelle, les dispositifs d'éclairage selon l'invention sont immédiatement prêts à l'usage en cas de besoin et sont mobiles avec la nacelle. En outre, les dispositifs d'éclairage selon l'invention peuvent remplir des fonctions additionnelles avantageuses, comme cela ressortira de la description ci-après.

Selon d'autres caractéristiques avantageuses de l'invention, prises isolément ou en combinaison :
- Les faisceaux lumineux projettent des marquages au sol délimitant une zone balisée autour de la nacelle élévatrice.
- Au moins l'un des marquages au sol comporte une forme figurative, par exemple un graphisme de danger.
- Les dispositifs d'éclairage génèrent sélectivement des faisceaux lumineux dirigés vers le sol et l'environnement proche de la nacelle élévatrice, à moins de dix mètres des organes de liaison au sol.
- Les dispositifs d'éclairage éclairent au moins partiellement les organes de liaison au sol.
- Le système d'éclairage comprend au moins un dispositif d'éclairage agencé sur un côté avant de la partie basse, notamment sur un côté avant d'une tourelle appartenant à la partie basse.
- Le système d'éclairage comprend au moins un dispositif d'éclairage agencé sur un côté latéral de la partie basse, notamment sur un côté latéral et le dessous d'une tourelle appartenant à la partie basse.
- Le système d'éclairage comprend au moins deux dispositifs d'éclairage agencés sur les côtés latéraux de la partie basse, un sur chaque côté.
- Le système d'éclairage comprend au moins un dispositif d'éclairage agencé sur un côté avant et le dessous de la plate-forme.
- Le système d'éclairage comprend au moins un dispositif d'éclairage agencé sur un côté latéral et le dessous de la plate-forme.
- Le système d'éclairage comprend au moins un dispositif d'éclairage agencé sur le dessous de la structure élévatrice.
- Le système d'éclairage comprend au moins un dispositif d'éclairage agencé sur un côté latéral, avant ou arrière de la structure élévatrice.
- Les faisceaux lumineux générés par les dispositifs d'éclairage sont inclinés par rapport au sol selon des angles compris entre 20 degrés et 90 degrés inclus.
- Au moins l'un des dispositifs d'éclairage génère des faisceaux lumineux colorés dont la couleur est fonction des conditions de fonctionnement de la nacelle élévatrice.
- Le système d'éclairage comprend des dispositifs d'éclairage adaptés pour éclairer le sol et l'environnement proche de la nacelle élévatrice sur 360 degrés.

L'invention a également pour objet un procédé de mise en oeuvre d'une nacelle élévatrice telle que mentionnée ci-dessus. Le procédé est caractérisé en ce que lors d'une opération de manoeuvre sur chantier, de chargement ou de déchargement de la nacelle élévatrice, les dispositifs d'éclairage génèrent des faisceaux lumineux dirigés vers le sol et l'environnement proche de la nacelle élévatrice, incluant au moins en partie une zone comprise entre 0 et 1 mètre du bord des organes de liaison au sol, ces faisceaux lumineux étant dirigés vers quatre côtés opposés deux-à-deux de la nacelle élévatrice.

L'invention sera mieux comprise à la lecture de la description qui va suivre, donnée uniquement à titre d'exemple non limitatif et faite en référence aux dessins annexés sur lesquels :
- la figure 1 est une vue en perspective d'une nacelle élévatrice conforme à l'invention ;
- la figure 2 est une vue de côté selon la flèche II à la figure 1 ;
- la figure 3 est une vue de dessus selon la flèche III à la figure 1 ;
- la figure 4 est une vue avant selon la flèche IV à la figure 1 ;
- la figure 5 est une vue en élévation du point de vue d'un opérateur positionné dans le panier de la nacelle, la nacelle étant représentée schématiquement dans un but de simplification ;
- la figure 6 est une autre représentation schématique de la nacelle, montrée en perspective ;
- la figure 7 est une représentation schématique d'un opérateur positionné dans le panier de la nacelle, en situation de travail ;
- la figure 9 est une représentation schématique de l'opérateur appuyant sur un bouton d'arrêt, en situation d'arrêt d'urgence ;
- la figure 11 est une représentation schématique de la nacelle, en situation de panne ;
- la figure 13 est une représentation schématique de l'opérateur positionné dans le panier de la nacelle, en situation d'accident ;

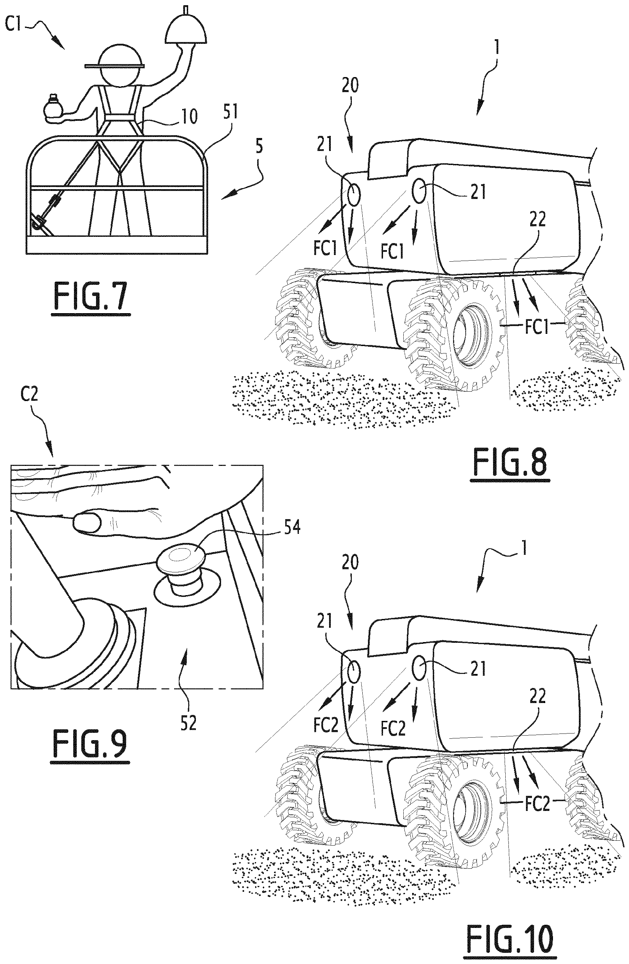

- les figures 8, 10, 12 et 14 sont des représentations schématiques partielles de la nacelle, correspondant respectivement aux situations des figures 7, 9, 11 et 13, avec des faisceaux lumineux de couleurs différentes ; et

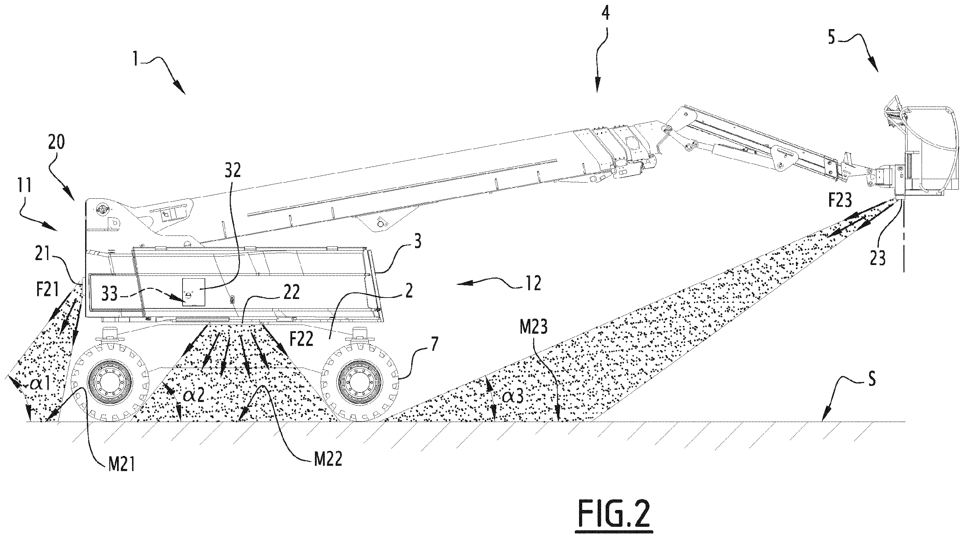

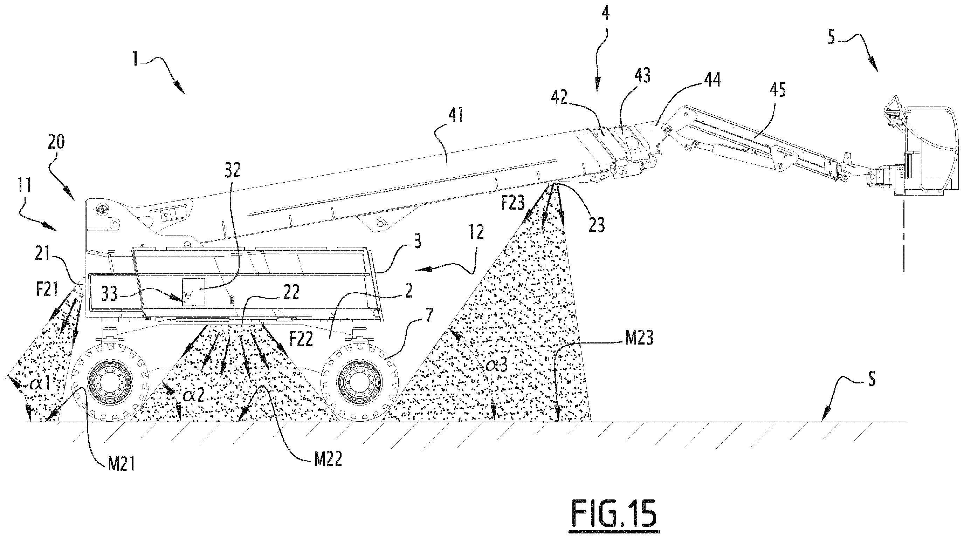

- la figure 15 est une vue analogue à la figure 2, montrant un deuxième mode de réalisation d'une nacelle conforme à l'invention.

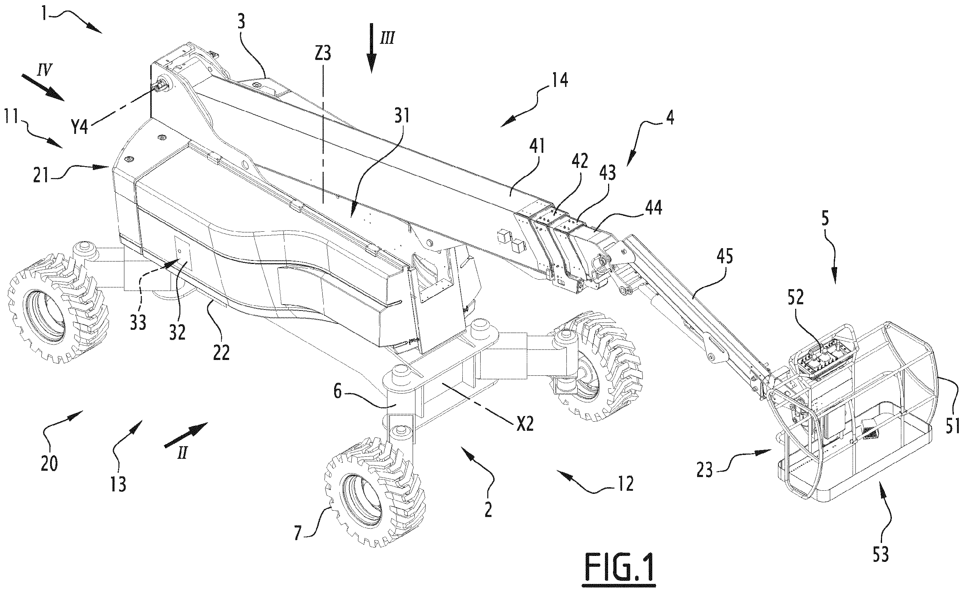

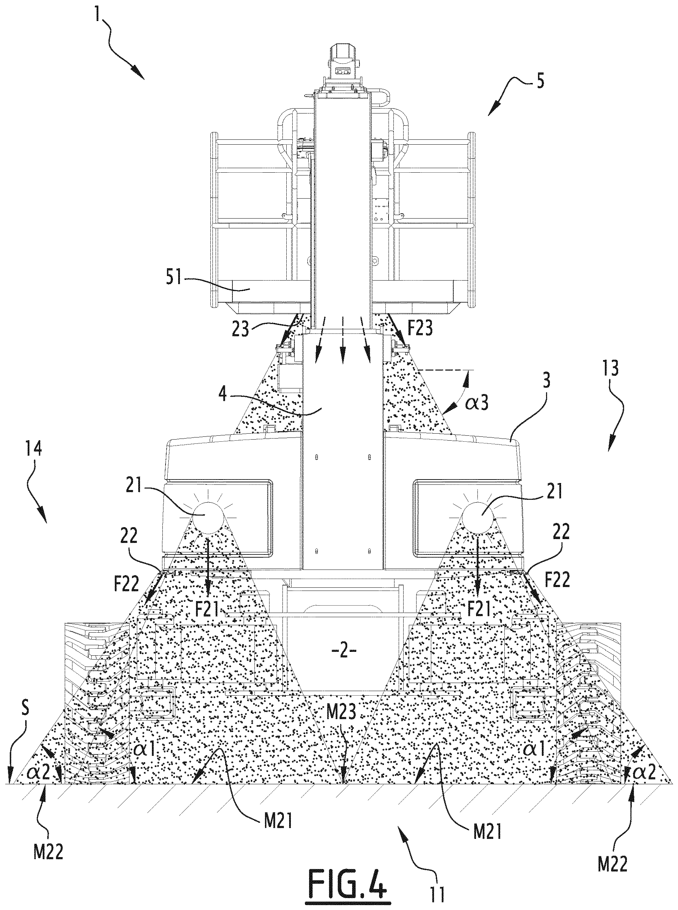

Sur les figures 1 à 14 est représentée une nacelle élévatrice 1 conforme à l'invention.

La nacelle 1 comprend un châssis roulant 2, une tourelle 3, un bras télescopique 4 et une plate-forme 5. Le châssis 2 et la tourelle 3 constituent la partie basse de la nacelle 1, tandis que le bras télescopique 4 constitue la structure élévatrice de la nacelle 1. La nacelle 1 présente un côté avant 11, un côté arrière 12, un côté gauche 13 et un côté droit 14. La nacelle 1 est prévue pour être pilotée par un opérateur 10 positionné sur la plate-forme 5. L'opérateur 10 est représenté schématiquement, uniquement aux figures 7, 9 et 13, dans un but de simplification.

Le châssis 2 s'étend suivant un axe longitudinal X2. Le châssis 2 est pourvu d'essieux 6 supportant des roues 7, permettant à la nacelle 1 de se translater sur une surface au sol S. Les roues 7 forment des organes de liaison au sol S de la nacelle 1. Sur l'exemple des figures, les essieux 6 sont télescopiques et articulés en rotation sur le châssis 2. Néanmoins, en pratique, les essieux 6 peuvent présenter toute configuration adaptée à l'application visée. Notamment, les essieux 6 peuvent être des essieux droits, télescopiques ou non. Les moyens de motorisation du châssis 2, non représentés, peuvent comprendre un moteur à combustion interne ou un moteur électrique. Sur le châssis 2 peuvent également être montés une unité centrale de gestion électronique, un réservoir hydraulique, un réservoir de carburant, et/ou un ensemble de batteries électriques.

La tourelle 3 est montée sur le châssis 2, en étant mobile en rotation à 360 degrés autour d'un axe vertical Z3. De préférence, la tourelle 3 est actionnée par des moyens hydrauliques, non représentés. La tourelle 3 comporte un logement longitudinal 31 prévu pour recevoir le bras 4 en position de repos. La tourelle 3 comporte également un volet latéral 32 recouvrant de manière amovible un pupitre de commande 33.

Le bras télescopique 4 est monté sur la tourelle 3, en étant articulé en rotation autour d'un axe horizontal Y4. Le bras 4 comprend plusieurs caissons allongés 41, 42, 43 et 44, emboîtés les uns dans les autres. En variante, le bras 4 peut être un bras élévateur articulé ou de tout autre type connu. A l'extrémité 44 du bras 4 est agencée une structure à parallélogramme 45, supportant la plate-forme 5.

La plate-forme 5 est prévue pour recevoir une charge, notamment du personnel et de l'équipement. La plate-forme 5 comprend un panier 51 et une console de commande 52 disposée du côté avant 11 du panier 51. En déplacement sur le sol S, lorsque la tourelle 3 est orientée à 0 degrés, l'opérateur 10 de la nacelle 1 est positionné dans le panier 51 de la plate-forme 5 et regarde en direction du côté avant 11 de la nacelle 1. Le panier 51 est formé par différents montants verticaux et horizontaux. Le panier 51 est pourvu d'une porte d'accès 53 située du côté arrière 12.

En fonctionnement de la nacelle élévatrice 1, la position de la console de commande 52, et plus globalement du poste de commande, c'est-à-dire de la zone du panier 51 où se tient l'opérateur pour contrôler la nacelle élévatrice 1, au moyen de la console de commande 52, varie par rappport aux organes de liaison au sol suivant le déplacement de la structure élévatrice.

La nacelle 1 est également équipée d'un système d'éclairage 20, permettant d'éclairer le sol S et l'environnement proche de la nacelle 1, à moins de dix mètres des roues 7. Comme les rayons lumineux projetés sont généralement diffus, on précise que le système d'éclairage 20 est prévu pour éclairer essentiellement à moins de cinq mètres des roues 7. Autrement dit, au moins 50% de l'intensité lumineuse projetée par le système d'éclairage 20 est concentrée à moins de cinq mètres des roues 7.

En particulier, le système d'éclairage 20 vise à éclairer au moins en partie une zone comprise entre 0 et 1 mètre du bord des roues 7, autour de la nacelle 1. En l'espèce, le bord des roues 7 désigne leur enveloppe externe, du côté opposé au châssis 2. De préférence, le système d'éclairage 20 éclaire au moins en partie les roues 7.

Ainsi, le système 20 permet d'améliorer la visibilité de l'opérateur 10 positionné sur la plate-forme 5 et de faciliter ses manoeuvres, à la fois lors d'une opération de chargement ou de déchargement de la nacelle 1 ou lors d'une opération de manoeuvre sur chantier. En outre, pendant le travail de l'opérateur 10 en hauteur, le système 20 permet d'avertir des personnes au sol S de l'intervention en cours, ou bien de les prévenir en cas d'urgence.

Le système d'éclairage 20 comprend plusieurs dispositifs d'éclairage 21, 22 et 23, disposés sur la tourelle 3 et la plate-forme 5. Sur l'exemple des figures, deux dispositifs 21 sont positionnés sur l'avant de la tourelle 3, deux dispositifs 22 sont positionnés sur les côtés et le dessous la tourelle 3, tandis qu'un dispositif 23 est positionné sur l'avant et le dessous de la plate-forme 5.

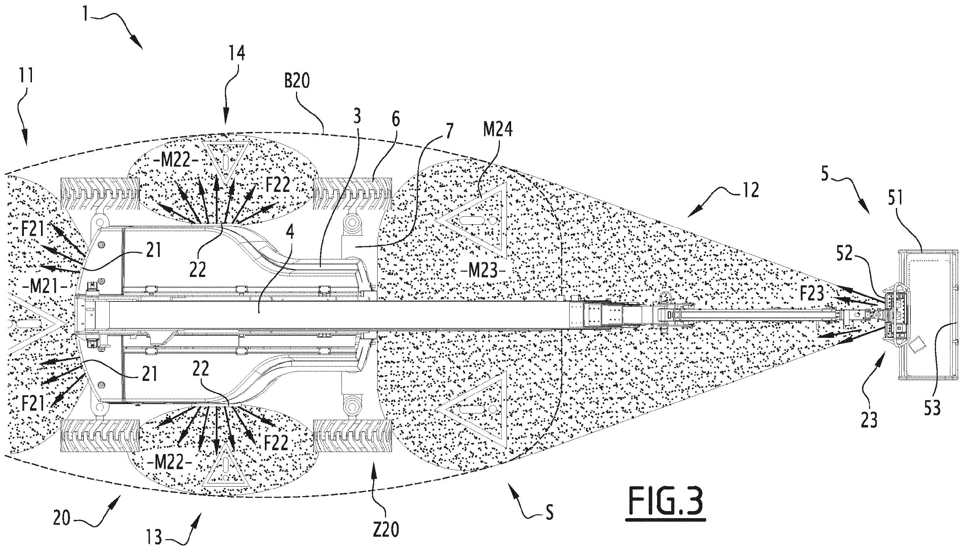

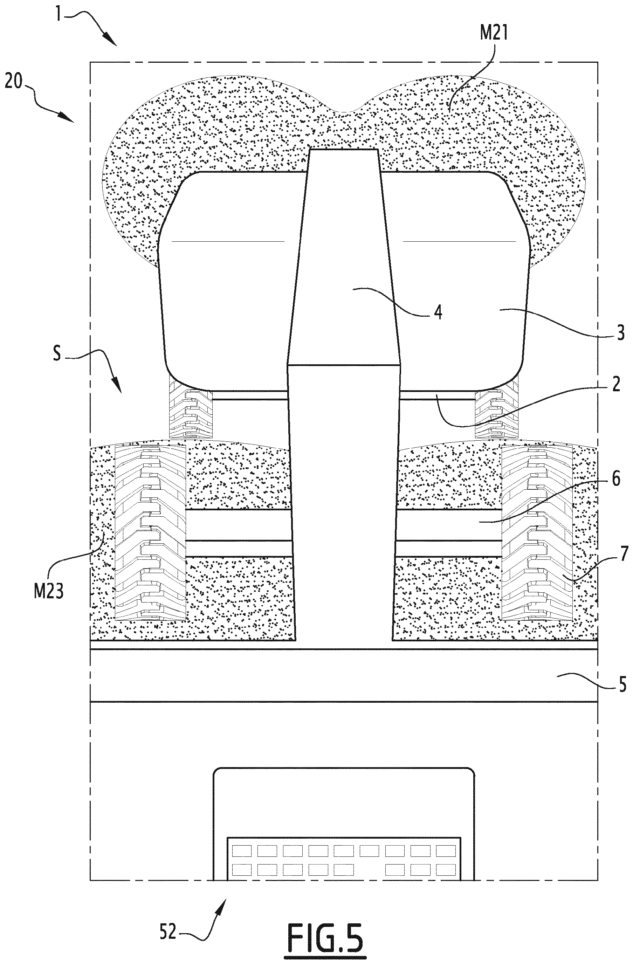

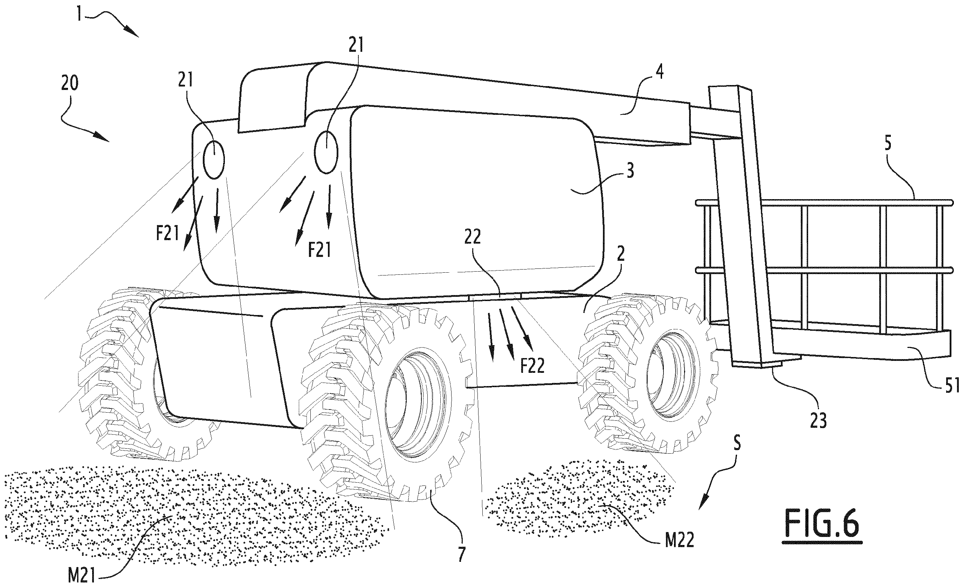

Comme montré aux figures 3 à 6, les dispositifs 21, 22 et 23 génèrent des faisceaux lumineux F21, F22 et F23 projetant des marquages M21, M22 et M23 au sol S. Sur les figures 2, 3 et 4, tous les dispositifs 21, 22 et 23 sont allumés. Sur la figure 5, les dispositifs 21 et 23 sont allumés, mais pas les dispositifs 22. Sur la figure 6, les dispositifs 21 et 22 sont allumés, mais pas le dispositif 23.

Les dispositifs 21, 22 et 23 sont configurés pour éclairer le sol S et l'environnement proche de la nacelle 1. Les faisceaux F21 sont dirigés globalement vers l'avant de la tourelle 3, de sorte que lorsque la tourelle 3 est en position droite par rapport au châssis 2, les marquages M21 sont situés du côté avant 11 de la nacelle 1. Les faisceaux F22 sont dirigés globalement sur les côtés de la tourelle 3, de sorte que lorsque la tourelle 3 est en position droite par rapport au châssis 2, les marquages M22 sont situés sur les côtés latéraux 13 et 14 de la nacelle 1. Les faisceaux F23 sont dirigés globalement vers l'avant de la plate-forme 5, de sorte que lorsque la tourelle 3 est en position droite par rapport au châssis 2, avec le mât 4 et la plate-forme 5 situés dans son prolongement du côté arrière, le marquage M23 est situé sur le côté arrière 12 de la nacelle 1.

Le système d'éclairage permet ainsi à un opérateur contrôlant les mouvements de la nacelle élévatrice 1 d'avoir une vision claire des abords de la partie basse, éclairés sur quatre côtés 11, 12, 13 et 14 opposés deux-à-deux, quelle que soit l'orientation de la console de commande 52 par rapport aux organes de liaison au sol.

Sur l'exemple des figures 2 et 3, les faisceaux lumineux F21, F22 et F23 sont inclinés par rapport au sol S selon des angles α1, α2 et α3 compris entre 20 et 90 degrés inclus. Plus précisément, comme montré aux figures 2 et 3, chaque dispositif 21, 22 et 23 génère des faisceaux lumineux F21, F22 et F23 inclinés par rapport au sol S selon un ensemble d'angles α1, α2 et α3 compris entre 20 et 90 degrés inclus, quelle que soit la direction considérée. En particulier, les angles α1 sont compris entre 50 et 75 degrés, les angles α2 sont compris entre 50 et 65 degrés, et les angles α3 sont compris entre 25 et 35 degrés. Pour une nacelle 1 roulant au maximum à 6 kilomètres / heure et freinant sur deux mètres, les faisceaux F21, F22 et F23 sont orientés pour éclairer à moins de cinq mètres du châssis 2. Plus précisément, les faisceaux F21, F22 et F23 sont orientés pour éclairer au moins en partie la zone comprise entre 0 et 1 mètre du bord des roues 7. Comme montré aux figures 2 et 3, les marquages M21, M22 et M23 au sol S recouvrent partiellement cette zone, mais pas intégralement. De préférence pour faciliter les manoeuvres, les marquages M21, M22 et M23 s'étendent en partie en dessous et autour des roues 7.

Par comparaison avec le système d'éclairage 20 de l'invention, les faisceaux projetés par les phares de conduite équipant les véhicules automobiles sont prévus pour éclairer, en feux de croisement, au moins à trente mètres du châssis. Ainsi, ces phares de conduite sont généralement inclinés par rapport au sol S, en feux de croisement, selon des angles compris entre 3 et 15 degrés inclus. Les phares de conduite n'éclairent pas le sol S à proximité des roues.

De préférence, les dispositifs 21, 22 et 23 sont fixes, autrement dit l'orientation des faisceaux F21, F22 et F23 est fixe. En alternative, les dispositifs 21, 22 et 23 peuvent être configurés pour pouvoir orienter leurs faisceaux F21, F22 et F23. Autrement dit, les dispositifs 21, 22 et 23 peuvent projeter des faisceaux F21, F22 et F23 orientables. Dans ce cas, les angles α1, α2 et α3 sont réglables.

Comme montré notamment à la figure 3, les marquages M21, M22 et M23 sont projetés par le système d'éclairage 20 tout autour de la nacelle 1. Ainsi, les marquages M21, M22 et M23 délimitent une zone balisée Z20 autour de la nacelle 1, matérialisée par une barrière fictive B20 représentée en traits discontinus sur la figure 3. L'invention permet ainsi d'améliorer la sécurité des personnes proches de la nacelle 1.

Selon un mode de réalisation non représenté de l'invention, le système d'éclairage 20 peut comprendre des dispositifs d'éclairage adaptés pour générer des faisceaux de lumière éclairant les abords de la partie basse de la nacelle élévatrice 1 sur 360° degrés, de manière à projeter sur le sol un marquage lumineux formant une zone continûment éclairée.

Selon un mode de réalisation particulier montré à la figure 3, les dispositifs d'éclairage 21, 22 et 23 comportent un système d'obturation partielle, tel qu'un masque présentant une forme distinctive. Les masques permettent de faire figurer des formes distinctives au sol S dans les marquages M21, M22 et M23. La forme distinctive peut être un symbole, un logo ou du texte. La forme distinctive peut notamment représenter un graphisme de danger M24, tel que représenté sur l'exemple de la figure 3. Ainsi, le système 20 permet de fournir une information plus riche aux personnes proches de la nacelle 1 pour leur permettre d'adopter un comportement approprié. Le masque peut être fixe, ou conçu pour être amovible en fonction de la situation. Selon une variante, seuls certains dispositifs 21, 22 ou 23 sont équipés d'un masque.

Le système d'éclairage 20 peut être paramétré de sorte que lors du démarrage de la nacelle 1, au moins certains des dispositifs 21, 22 et 23 sont automatiquement allumés. En service, chacun des dispositifs 21, 22 et 23 peut être sélectivement allumé ou éteint, au choix de l'opérateur 10. Le système d'éclairage 20 peut également comporter un dispositif de sécurité prévu pour allumer automatiquement tout ou partie des dispositifs d'éclairage 21, 22 et 23 en cas d'urgence.

En outre, au moins certains des dispositifs 21, 22 et 23 peuvent être configurés pour projeter des signaux dynamiques, sous forme d'éclairages lumineux spécifiques, tels que des changements de couleur ou des éclats lumineux intermittents. Ces signaux dynamiques peuvent être activés en cas d'urgence, ou bien en fonction des déplacements de la nacelle 1 ou de ses éléments constitutifs, par exemple lors de la translation du châssis 2 ou de la descente de la plate-forme 5. Ces signaux dynamiques rendent le système d'éclairage 20 encore plus visible, ce qui améliore encore la sécurité des personnes proches de la nacelle 1, ainsi que la sécurité de l'opérateur, notamment en situation d'urgence.

Les dispositifs 21, 22 et 23 peuvent se présenter sous forme de phares classiques, comme c'est le cas des dispositifs 21 sur les figures. Dans ce cas, ces phares ne remplissent néanmoins pas une fonction de phares de conduite classiques. En alternative, les dispositifs 21, 22 et 23 peuvent se présenter chacun sous forme d'un boitier incluant un carter, une vitre, ainsi qu'une ou plusieurs ampoules ou diodes électroluminescentes (LED) agencées dans le carter et projetant des faisceaux lumineux à travers la vitre. De manière avantageuse, les LED ont une durée de vie importante et ne nécessitent pratiquement pas d'entretien.

Pour chaque dispositif 21, 22 et 23, les ampoules ou diodes peuvent être agencées selon un motif particulier. Ainsi, le système d'éclairage 20 présente une signature visuelle particulière, renforçant l'identité visuelle de la nacelle 1.

La nacelle 1 peut comprendre d'autres dispositifs d'éclairage auxiliaires, par exemple pour éclairer la zone d'intervention en hauteur de l'opérateur 10. En alternative, les dispositifs 21, 22 ou 23 peuvent être configurés pour pouvoir orienter leurs faisceaux F21, F22 et F23 afin d'éclairer la zone d'intervention en hauteur.

Sur les figures 7 à 14 sont illustrées différentes conditions C1, C2, C3 et C4 de fonctionnement de la nacelle 1, notamment des situations d'urgence. Les figures 7, 9, 11 et 13 sont des représentations schématiques de différentes situations de travail ou d'urgence. Les figures 8, 10, 12 et 14 sont des représentations schématiques partielles de la nacelle 1 montrée à la figure 6, correspondant respectivement aux situations des figures 7, 9, 11 et 13, avec des faisceaux lumineux FC1, FC2, FC3 et FC4 de couleurs différentes.

Avantageusement, au moins certaines des couleurs utilisées correspondent à des conventions connues du grand public, notamment utilisées sur les tableaux de bord automobiles :
- vert : situation normale,
- orange : disfonctionnement ne nécessitant pas d'arrêt immédiat,
- rouge : danger nécessitant un arrêt immédiat.

Sur la figure 7, l'opérateur 10 est positionné dans le panier 51 de la nacelle 1, en situation de travail ou condition C1. Sur la figure 8, les dispositifs 21 et 22 projettent des faisceaux FC1 de couleur verte. Ainsi, grâce au système 20, les personnes au sol S à proximité de la nacelle 1 peuvent facilement reconnaître qu'une intervention est en cours, et se comporter en conséquence.

Sur la figure 9, la main de l'opérateur 10 s'apprête à appuyer sur un bouton d'arrêt d'urgence 54 équipant la console de commande 52. Le mode d'arrêt de sécurité de la nacelle 1 est alors activé, ce qui correspond à la condition C2. Sur la figure 10, dans ce mode d'arrêt de sécurité, les dispositifs 21 et 22 projettent des faisceaux FC2 de couleur rouge. Ainsi, grâce au système 20, les personnes au sol S à proximité de la nacelle 1 peuvent facilement reconnaître que le mode d'arrêt de sécurité a été activé, et réagir en conséquence. Le mode d'arrêt de sécurité peut également être activé par d'autres dispositifs de sécurité de la nacelle, notamment un limiteur de charge dans la plateforme ou un limiteur d'inclinaison du châssis. Ces dispositifs de sécurité sont classiques et ne seront donc pas décrits davantage.

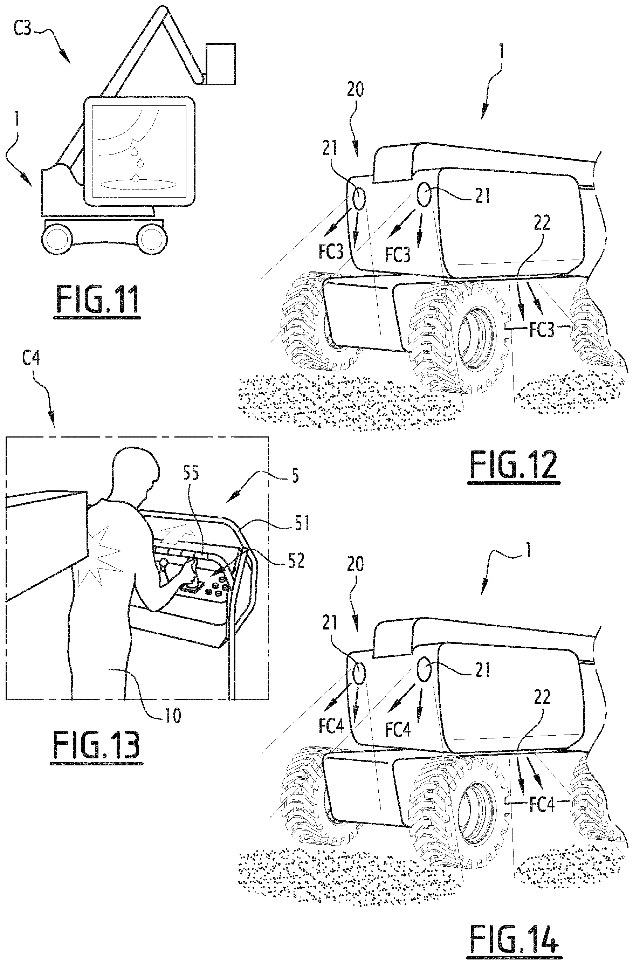

Sur la figure 11, la nacelle 1 est représentée en situation de panne, ou condition C3. Sur la figure 12, les dispositifs 21 et 22 projettent des faisceaux FC3 de couleur orange. Ainsi, grâce au système 20, les personnes au sol S à proximité de la nacelle 1 peuvent facilement reconnaître que la nacelle 1 est en panne, et réagir en conséquence.

Sur la figure 13, l'opérateur 10 est positionné dans le panier 51 de la nacelle 1, lorsqu'un accident survient. En l'espèce, l'opérateur 10 travaillant en hauteur dans le panier 51 heurte accidentellement une poutre lors d'un déplacement de la plate-forme 5. Un système de sécurité, par exemple une barre amovible 55 disposée entre l'opérateur 10 et la console de commande 52, permet alors d'activer un mode accident de la nacelle 1, ou condition C4. Sur la figure 14, les dispositifs 21 et 22 projettent des faisceaux FC4 de couleur bleue. Ainsi, grâce au système 20, les personnes au sol S à proximité de la nacelle 1 peuvent facilement reconnaître que la situation d'accident en hauteur, et réagir en conséquence.

Ainsi, selon un mode de réalisation avantageux de l'invention, au moins l'un des dispositifs d'éclairage 21, 22 et 23 est configuré pour générer des faisceaux lumineux colorés FC1, FC2, FC3, FC4, dont la couleur est fonction des conditions de fonctionnement C1, C2, C3, C4 de la nacelle 1. De préférence, au moins certains des dispositifs 21, 22 et 23, voire tous les dispositifs 21, 22 et 23, sont configurés pour générer des faisceaux lumineux colorés FC1, FC2, FC3 et FC4.

A cet effet, les dispositifs 21, 22 ou 23 comprennent de préférence un ensemble de diodes de couleurs différentes. Différentes couleurs peuvent être projetées par le même dispositif 21, 22 ou 23, avec une couleur distincte pour chaque condition de fonctionnement C1, C2, C3, C4 de la nacelle 1. L'ensemble des dispositifs 21, 22 et 23 projettent une couleur donnée pour une condition de fonctionnement C1, C2, C3, C4 particulière de la nacelle 1.

En comparaison, il est connu d'équiper une machine avec un dispositif d'écran affichant une image, pour signaler aux personnes se trouvant dans l'environnement proche de la machine que celle-ci est sous tension ou que le châssis se déplace.

Sur la figure 15 est représentée une nacelle élévatrice 1 conforme à un deuxième mode de réalisation de l'invention. Les éléments constitutifs similaires au premier mode de réalisation portent les mêmes références numériques. Le dispositif 23 est positionné sur le dessous de la structure élévatrice 4, plus précisément sous le caisson 41, au lieu d'être positionné sur la plate-forme 5. En alternative, le dispositif 23 peut être positionné en un autre emplacement de la structure élévatrice 4.

Par ailleurs, la nacelle élévatrice 1 peut être conformée différemment des figures 1 à 15 sans sortir du cadre de l'invention. En particulier, le système d'éclairage 20 peut présenter toute configuration adaptée à l'application visée. Selon une variante particulière non représentée, les organes de liaison au sol S équipant le châssis roulant 2 peuvent être des chenilles au lieu des roues 7.

En pratique, la nacelle élévatrice 1 peut être une nacelle à bras articulé, une nacelle à bras télescopique, une nacelle à mât vertical, une nacelle ciseaux. Dans le cas des nacelles ciseaux et des nacelles à mât vertical, la console de commande est déplaçable dans la plateforme pour mieux contrôler visuellement l'absence d'obstacle de chaque côté du châssis. La console de commande peut être décrochée de son emplacement et être fixée sur un bord opposé de la plateforme.

Selon sa construction et ses dimensions, la nacelle 1 peut être mise en oeuvre pour les travaux de maintenance ou d'élagage, pour les inventaires en entrepôts, pour les chantiers navals, de démolition, de construction ou d'entretien et de finition des ouvrages d'art, etc.

Quel que soit le mode de réalisation, la nacelle 1 comporte une partie basse 2+3 équipée d'organes 7 de liaison au sol S, une structure élévatrice 4, une plate-forme 5 et un système d'éclairage 20. Le système d'éclairage 20 comprend différents dispositifs d'éclairage 21+22 autres que des phares de conduite, qui sont agencés sur la partie basse 2+3 de la nacelle élévatrice 1 et génèrent sélectivement des faisceaux lumineux F21+F22 dirigés vers le sol S et l'environnement proche de la nacelle élévatrice 1, incluant au moins en partie une zone comprise entre 0 et 1 mètre du bord des organes 7 de liaison au sol S.

En outre, les caractéristiques techniques des différents modes de réalisation et variantes mentionnés ci-dessus peuvent être, en totalité ou pour certaines d'entre elles, combinées entre elles. Ainsi, la nacelle élévatrice 1 peut être adaptée en termes de coût, de fonctionnalités et de performance.

## Revendications

1. Nacelle élévatrice (1), comprenant :
- une partie basse (2, 3) équipée d'organes (7) de liaison au sol (S) ;
- une structure élévatrice (4) ;
- une plate-forme (5) portée par la structure élévatrice (4) ;
- un système d'éclairage (20) comprenant différents dispositifs d'éclairage (21, 22, 23) autres que des phares de conduite;
**caractérisée en ce qu'**elle comprend une console de commande (52) disposée sur la plateforme (5) et dont la position par rapport aux organes (7) de liaison au sol (S) est variable, et **en ce que** les dispositifs d'éclairage (21, 22, 23) sont agencés sur la partie basse (2, 3) de la nacelle élévatrice (1) et sur la structure élévatrice (4) ou sur la plate-forme (5) et génèrent sélectivement des faisceaux lumineux (F21, F22, F23) dirigés vers le sol (S) et l'environnement proche de la nacelle élévatrice (1), incluant au moins en partie une zone comprise entre 0 et 1 mètre du bord des organes (7) de liaison au sol (S), ces faisceaux lumineux (F21, F22, F23) étant dirigés vers quatre côtés (11, 12, 13, 14) opposés deux-à-deux de la nacelle élévatrice (1) quelle que soit la position de la console de commande (52) par rapport aux organes (7) de liaison au sol (S).

2. Nacelle élévatrice (1) selon la revendication 1, **caractérisée en ce que** les faisceaux lumineux (F21, F22 ; F21, F22, F23) projettent des marquages (M21, M22 ; M21, M22, M23) au sol (S) délimitant une zone balisée (Z20) autour de la nacelle élévatrice (1).

3. Nacelle élévatrice (1) selon la revendication 2, **caractérisée en ce qu'**au moins l'un des marquages (M21, M22 ; M21, M22, M23) au sol (S) comporte une forme figurative (M24), par exemple un graphisme de danger.

4. Nacelle élévatrice (1) selon l'une des revendications précédentes, **caractérisée en ce que** les dispositifs d'éclairage (21, 22 ; 21, 22, 23) génèrent sélectivement des faisceaux lumineux (F21, F22 ; F21, F22, F23) dirigés vers le sol (S) et l'environnement proche de la nacelle élévatrice (1), à moins de dix mètres du bord des organes (7) de liaison au sol (S).

5. Nacelle élévatrice (1) selon l'une des revendications précédentes, **caractérisée en ce que** les dispositifs d'éclairage (21, 22 ; 21, 22, 23) éclairent au moins partiellement les organes (7) de liaison au sol (S).

6. Nacelle élévatrice (1) selon l'une des revendications précédentes, **caractérisée en ce que** le système d'éclairage (20) comprend au moins un dispositif d'éclairage (21) agencé sur un côté avant (11) de la partie basse (2,3), notamment sur un côté avant (11) d'une tourelle (3) appartenant à la partie basse (2, 3).

7. Nacelle élévatrice (1) selon l'une des revendications précédentes, **caractérisée en ce que** le système d'éclairage (20) comprend au moins un dispositif d'éclairage (22) agencé sur un côté latéral (13 ; 14) de la partie basse (2,3), notamment sur un côté latéral (13 ; 14) et le dessous d'une tourelle (3) appartenant à la partie basse (2, 3).

8. Nacelle élévatrice (1) selon l'une des revendications précédentes, **caractérisée en ce qu'**au moins l'un des dispositifs d'éclairage (21, 22 ; 21, 22, 23) génère des faisceaux lumineux colorés (FC1, FC2, FC3, FC4) dont la couleur est fonction des conditions de fonctionnement (C1, C2, C4, C4) de la nacelle élévatrice (1).

9. Nacelle élévatrice selon l'une des revendications précédentes, le système d'éclairage (20) comprend des dispositifs d'éclairage adaptés pour éclairer le sol (S) et l'environnement proche de la nacelle élévatrice (1) sur 360 degrés.

10. Procédé de mise en oeuvre d'une nacelle élévatrice (1) selon l'une des revendications 1 à 9, **caractérisé en ce que** lors d'une opération de manoeuvre sur chantier, de chargement ou de déchargement de la nacelle élévatrice (1), les dispositifs d'éclairage (21, 22 ; 21, 22, 23) génèrent des faisceaux lumineux (F21, F22 ; F21, F22, F23) dirigés vers le sol (S) et l'environnement proche de la nacelle élévatrice (1), incluant au moins en partie une zone comprise entre 0 et 1 mètre du bord des organes (7) de liaison au sol (S), ces faisceaux lumineux (F21, F22, F23) étant dirigés vers quatre côtés (11, 12, 13, 14) opposés deux-à-deux de la nacelle élévatrice (1).

## Patentansprüche

1. Hubarbeitsbühne (1), umfassend:
- ein unteres Teil (2, 3), das mit Elementen (7) zur Anbindung an den Boden (S) ausgerüstet ist;
- eine Hubstruktur (4);
- eine von der Hubstruktur (4) getragene Plattform (5);
- ein Beleuchtungssystem (20), das unterschiedliche Beleuchtungsvorrichtungen (21, 22, 23) umfasst, die sich von Fahrscheinwerfern unterscheiden;
**dadurch gekennzeichnet, dass** sie eine Steuerkonsole (52) umfasst, die auf der Plattform (5) angeordnet ist und deren Position in Bezug auf Elemente (7) zur Anbindung an den Boden (S) variabel ist, und dass die Beleuchtungsvorrichtungen (21, 22, 23) auf dem unteren Teil (2, 3) der Hubarbeitsbühne (1) und auf der Hubstruktur (4) oder der Plattform (5) angeordnet sind und selektiv Lichtbündel (F21, F22, F23) erzeugen, die zum Boden (S) und zur nahen Umgebung der Hubarbeitsbühne (1), die mindestens teilweise eine Zone zwischen 0 und 1 Meter vom Rand der Elemente (7) zur Anbindung an den Boden (S) umfasst, gerichtet sind, wobei diese Lichtbündel (F21; F22, F23) nach vier, je zu zweit gegenüberliegenden Seiten (11, 12, 13, 14) der Hubarbeitsbühne (1) gerichtet sind, wie auch immer die Position der Steuerkonsole (52) in Bezug auf die Elemente (7) zur Anbindung an den Boden (S) sind.

2. Hubarbeitsbühne (1) nach Anspruch 1, **dadurch gekennzeichnet, dass** die Lichtbündel (F21, F22; F21, F22, F23) Markierungen (M21, M22; M21, M22, M23) auf den Boden (S) projizieren, die eine gekennzeichnete Zone (Z20) um die Hubarbeitsbühne (1) begrenzen.

3. Hubarbeitsbühne (1) nach Anspruch 2, **dadurch gekennzeichnet, dass** mindestens eine der Markierungen (M21, M22; M21, M22, M23) am Boden (S) eine figurative Form (M24), beispielsweise eine grafische Darstellung von Gefahr aufweist.

4. Hubarbeitsbühne (1) nach einem der vorhergehenden Ansprüche, **dadurch gekennzeichnet, dass** die Beleuchtungsvorrichtungen (21, 22; 21, 22, 23) selektiv Lichtbündel (F21, F22; F21, F22, F23) erzeugen, die zu dem Boden (S) und der nahen Umgebung der Hubarbeitsbühne (1) mindestens auf zehn Meter vom Rand der Element (7) zur Anbindung an den Boden (S) gerichtet sind.

5. Hubarbeitsbühne (1) nach einem der vorhergehenden Ansprüche, **dadurch gekennzeichnet, dass** die Beleuchtungsvorrichtungen (21, 22; 21, 22, 23) mindestens teilweise die Elemente (7) zur Anbindung an den Boden (S) beleuchten.

6. Hubarbeitsbühne (1) nach einem der vorhergehenden Ansprüche, **dadurch gekennzeichnet, dass** das Beleuchtungssystem (20) mindestens eine Beleuchtungsvorrichtung (21) umfasst, die an einer Vorderseite (11) des unteren Teils (2, 3), insbesondere auf einer Vorderseite (11) eines Drehturms (3), der zu dem unteren Teil (2, 3) gehört, angeordnet ist.

7. Hubarbeitsbühne (1) nach einem der vorhergehenden Ansprüche, **dadurch gekennzeichnet, dass** das Beleuchtungssystem (20) mindestens eine Beleuchtungsvorrichtung (22) umfasst, die an einer seitlichen Seite (13; 14) des unteren Teils (2, 3), insbesondere auf einer seitlichen Seite (13; 14) eines Drehturms (3) und unter diesem, der zu dem unteren Teil (2, 3) gehört, angeordnet ist.

8. Hubarbeitsbühne (1) nach einem der vorhergehenden Ansprüche, **dadurch gekennzeichnet, dass** mindestens eine der Beleuchtungsvorrichtungen (21, 22; 21, 22, 23) farbige Lichtbündel (FC1, FC2, FC3, FC4) erzeugt, deren Farbe eine Funktion des Betriebszustands (C1, C2, C4, C4) der Hubarbeitsbühne (1) ist.

9. Hubarbeitsbühne nach einem der vorhergehenden Ansprüche, wobei das Beleuchtungssystem (20) Beleuchtungsvorrichtungen umfasst, die angepasst sind, den Boden (S) und die nahe Umgebung der Hubarbeitsbühne (1) über 360 Grad zu beleuchten.

10. Verfahren zum Betreiben einer Hubarbeitsbühne (1) nach einem der Ansprüche 1 bis 9, **dadurch gekennzeichnet, dass** bei einem Arbeitsvorgang des Arbeitens auf der Baustelle, des Ladens oder Entladens der Hubarbeitsbühne (1) die Beleuchtungsvorrichtungen (21, 22; 21, 22, 23) Lichtbündel (F21, F22; F21, F22, F23) erzeugen, die zum Boden (S) und der nahen Umgebung der Hubarbeitsbühne (1), die mindestens ein Teil einer Zone zwischen 0 und 1 Meter vom Rand der Elemente (7) zum Anbinden an den Boden (S) einschließt, gerichtet sind, wobei diese Lichtbündel (F21, F22, F23) nach vier Seiten (11, 12, 13, 14), zu zweit gegenüberliegend, der Hubarbeitsbühne (1) gerichtet sind.

## Claims

1. An aerial lift (1), comprising:
- a lower portion (2, 3) equipped with members (7) for connecting to the ground (S);
- a lifting structure (4);
- a platform (5) supported by the lifting structure (4);
- a lighting system (20) including different lighting devices (21, 22, 23), other than driving lights;
**characterized in that** it comprises a control console (52) positioned on the platform (5) and the position of which relative to the members (7) for connecting to the ground (S) is variable, and **in that** the lighting devices (21, 22, 23) are arranged on the lower portion (2, 3) of the aerial lift (1) and on the lifting structure (4) or on the platform (5) and selectively generate colored light beams (F21, F22, F23) pointed toward the ground (S) and the environment immediately surrounding the aerial lift (1), at least partly including a zone comprised between 0 and 1 meter from the edge of the members (7) for connecting to the ground (S), these light beams (F21, F22, F23) being oriented toward four opposite sides (11, 12, 13, 14), in pairs, of the aerial lift (1) irrespective of the position of the control console (52) relative to the members (7) for connecting to the ground (S).

2. The aerial lift (1) according to claim 1, **characterized in that** light beams (F21, F22; F21, F22, F23) project markings (M21, M22; M21, M22, M23) on the ground (S) defining a flagged zone (Z20) around the aerial lift (1).

3. The aerial lift (1) according to claim 2, **characterized in that** at least one of the markings (M21, M22; M21, M22, M23) on the ground (S) includes a figurative shape (M24), for example a danger symbol.

4. The aerial lift (1) according to one of the preceding claims, **characterized in that** the lighting devices (21, 22, 23) selectively generate light beams (F21, F22; F21, F22, F23) pointed toward the ground (S) and the environment immediately surrounding the aerial lift (1), at less than ten meters from the edge of the members (7) for connecting to the ground (S).

5. The aerial lift (1) according to one of the preceding claims, **characterized in that** the lighting devices (21, 22; 21, 22, 23) at least partially light the members (7) for connecting to the ground (S).

6. The aerial lift (1) according to one of the preceding claims, **characterized in that** the lighting system (20) comprises at least one lighting device (21) arranged on a front side (11) of the lower portion (2, 3), in particular on a front side (11) of a tower (3) belonging to the lower portion (2, 3).

7. The aerial lift (1) according to one of the preceding claims, **characterized in that** the lighting system (20) comprises at least one lighting device (22) arranged on a lateral side (13; 14) of the lower portion (2, 3), in particular on a lateral side (14) and the bottom of a tower (3) belonging to the lower portion (2, 3).

8. The aerial lift (1) according to one of the preceding claims, **characterized in that** at least one of the lighting devices (21, 22; 21, 22, 23) generates beams of colored light (FC1, FC2, FC3, FC4) whose color depends on the operating conditions (C1, C2, C4, C4) of the aerial lift (1).

9. The aerial lift according to one of the preceding claims, **characterized in that** the lighting system (20) comprises lighting devices suitable for illuminating the ground (S) and the immediate environment of the aerial lift (1) over 360 degrees.

10. A method for implementing an aerial lift (1) according to one of claims 1 to 9, **characterized in that** during a maneuvering operation on a worksite, for loading or unloading of the aerial lift (1), the lighting devices (21, 22; 21, 22, 23) generate light beams (F21, F22; F21, F22, F23) pointed toward the ground (S) and the environment immediately surrounding the aerial lift (1), at least partly including a zone comprised between 0 and 1 meters of the edge of the members (7) for connecting to the ground (S), these light beams (F21, F22, F23) being oriented toward four opposite sides (11, 12, 13, 14), in pairs, of the aerial lift (1).
